# EUROPEAN PATENT SPECIFICATION

(11) **EP 3 070 765 B1**
(45) Date of publication and mention of the grant of the patent: **08.05.2019**
(21) Application number: 15159263.1
(22) Date of filing: 16.03.2015
(51) Int. Cl.: H01M 4/04, H01M 4/38, H01M 4/60, H01M 4/62, C08G 61/00, C08K 3/06, C08L 25/18, C08L 65/00, H01M 10/052, H01M 4/13

(54) **USE OF PEDOT/PSS IN A CATHODE OF A LITHIUM-SULFUR ELECTROCHEMICAL CELL**
VERWENDUNG VON PEDOT/PSS IN EINER KATHODE EINER ELEKTROCHEMISCHEN LITHIUMSCHWEFELZELLE
UTILISATION DE PEDOT/PSS DANS UNE CATHODE D'UNE CELLULE ÉLECTROCHIMIQUE LITHIUM-SOUFRE

(43) Date of publication of application: 21.09.2016
(73) Proprietor: Heraeus Battery Technology GmbH, 63450 Hanau (DE)
(72) Inventor: Seuring, Jan, 51065 Köln (DE); Lövenich, Wilfried, 51469 Bergisch Gladbach (DE); Gaiser, Detlef, 51061 Köln (DE)
(74) Representative: Herzog, Fiesser & Partner Patentanwälte PartG mbB

(56) References cited:
- US-A1- 2014 234 707
- Jeongyeon Lee ET AL: "Surface Modification of Sulfur Cathodes with PEDOT:PSS Conducting Polymer in Lithium-Sulfur Batteries", Journal of The Electrochemical Society, 7 March 2015 (2015-03-07), pages 935-939, XP055206538, DOI: 10.1149/2.0651506jes] Retrieved from the Internet: URL:http://jes.ecsdl.org/content/162/6/A93 5.full.pdf [retrieved on 2015-08-06]
- OUYANG J ET AL: "On the mechanism of conductivity enhancement in poly(3,4-ethylenedioxythiophene):poly(styr ene sulfonate) film through solvent treatment", POLYMER, ELSEVIER SCIENCE PUBLISHERS B.V, GB, vol. 45, no. 25, 1 November 2004 (2004-11-01), pages 8443-8450, XP004648666, ISSN: 0032-3861, DOI: 10.1016/J.POLYMER.2004.10.001
- HAN LI ET AL: "Improving the performance of PEDOT-PSS coated sulfur@activated porous graphene composite cathodes for lithium-sulfur batteries", JOURNAL OF MATERIALS CHEMISTRY A, vol. 2, no. 43, 4 September 2014 (2014-09-04), pages 18345-18352, XP055206757, ISSN: 2050-7488, DOI: 10.1039/C4TA03366C
- YUAN YANG ET AL: "Improving the Performance of Lithium-Sulfur Batteries by Conductive Polymer Coating", ACS NANO, vol. 5, no. 11, 22 November 2011 (2011-11-22), pages 9187-9193, XP055187449, ISSN: 1936-0851, DOI: 10.1021/nn203436j
- DUAN LI ET AL: "Fabrication of conductive polymer-coated sulfur composite cathode materials based on layer-by-layer assembly for rechargeable lithium-sulfur batteries", COLLOIDS AND SURFACES. A, PHYSICACHEMICAL AND ENGINEERING ASPECTS, vol. 414, 28 August 2012 (2012-08-28), pages 98-103, XP028956466, ISSN: 0927-7757, DOI: 10.1016/J.COLSURFA.2012.08.033

## Description

The present invention relates to a process for the production of a first electrode in a lithium-sulfur electrochemical cell.

Chargeable/dischargeable secondary batteries are widely used as large-capacity power storing batteries used in an electric vehicle, a power saving system, or a small-sized high-performance energy source for a portable electronic device, such as a mobile phone, a camcorder, or a laptop computer.

Lithium ion batteries as secondary batteries have relatively high energy density and relatively large capacity per unit area compared to nickel-manganese batteries and nickel-cadmium batteries. Due to their low self-discharge rate, long life span and lack of memory effect, lithium batteries are preferable and are convenient to use. However, lithium ion batteries have several problems when used as batteries for next generation electric vehicles. In particular, they lack stability due to low energy density and low output characteristics.

In order to address these problems of lithium ion batteries, studies have been made towards the development of lithium-sulfur secondary batteries or lithium-air secondary batteries that may realize high output and high energy density. Lithium-sulfur secondary batteries use sulfur as a cathode active material, use lithium or lithium-containing alloys as an anode, and are high-capacity batteries having a theoretical capacity of 1675 mAh/g with a potential of about 2.1 V. Since these lithium-sulfur secondary batteries have much higher theoretical capacities and energy densities than existing lithium ion batteries, they are suitable for use as batteries for electric vehicles that require high output and high energy density. Moreover, sulfur which is used as the cathode active material in lithium-sulfur secondary batteries exists in the earth and, thus, is inexpensive and has good price stability.

However, sulfur has electric non-conductor characteristics. As such, sulfur must be in contact with a material having high electrical conductivity, such as carbon, to be used as an active material of a secondary battery electrode. According to the related art, lithium-sulfur secondary batteries have been made in which sulfur and Ketjenblack® (manufactured by the Ketjen Black International Company), Super C® (manufactured by the Timcal Graphite & Carbon Inc.), Super P® (manufactured by the Timcal Graphite & Carbon Inc.), a carbon material, such as vapor grown carbon fiber (VGCF) or carbon nanotubes (CNTs), or a binder, such as polyvinylidene fluoride (PVdF) or poly(vinylidene fluoride-co-hexafluoropropylene) (PVdF-co-HEP), are put in a mechanical milling device, such as a ball mill, are mixed in a dry or wet manner to produce a slurry which is used for an electrode.

Recently it has been shown that conductive polymers can be used to enhance the cycle life and rate capability of lithium sulfur batteries. In these cases the conductive polymer poly(3,4-ethylenedioxythiophene) (PEDOT) has been used to coat carbon/sulfur particles. The polymerization was performed in the presence of sulfur generating coated sulfur particles (Chen et al., Scientific Reports 2013, 3, 1910). The disadvantage of this approach, however, has to be seen in the fact that the polymerization of PEDOT requires several steps since the oxidizing agent needs to be washed out and the sulfur particles need to be purified.

PEDOT can also be prepared in the presence of polymeric sulfonic acids such as polystyrene sulfonic acid. The resulting complex (PEDOT : PSS) can be dispersed in solvents and allows the facile coating. Yang *et al.* have shown that PEDOT : PSS can be used to coat sulfur impregnated mesoporous carbon materials with ordered crystalline structure (cmk-3) (ACS Nano 2011, 5, 9187). However, the preparation of these structures also requires a number of process steps. Sun et al. (J. of Materials Chemistry A, 2014, 18345-18352) have prepared a PEDOT : PSS dispersion with activated graphene. However, PEDOT was not prepared in the absence of oxygen which leads to low conductivity. Furthermore, both Yang *et al.* and Sun *et al.* have used ethanol as dispersing agent. However ethanol is unsuitable for industrial applications due to its low flash point (12°C).

US 2014/234707 A1 discloses a coated carbon-sulfur composite, comprising a core of carbon and sulfur or a sulfur compound; and in the order listed, A) a coating of ionically charged polymer in contact with at least a portion of an outer surface of the core; B) a layer of an ionically charged polymer having a charge opposite to the charge of the coating A) over the coating A): and C) a layer of another ionically charged polymer having a charge opposite to the charge of the layer B) and equal to the charge of the coating A) which is over the layer B).

Jeongyeon et al. ("Surface Modification of Sulfur Cathodes with PEDOT: PSS Conducting Polymer in Lithium-Sulfur Batteries". Journal of The Electrochemical Society (2015), Vol. 162 (6), pages A935-A939) disclose the coating of sulfur powder with poly(3,4-ethylenedioxythiophene)-polystyrenesulfonic acid (PEDOT: PSS) using a wet mixing process in water.

Ouyang et al. ("On the mechanism of conductivity enhancement in poly(3,4-ethylenedioxythiophene) : poly(styrene sulfonate) film through solvent treatment". Polymer (2004), Vol. 45, pages 8443-8450) disclose the enhancement of the conductivity of a poly(3,4-ethylenedioxythiophene) : poly(styrenesulfonate) (PEDOT : PSS) film by more than 100-folds on adding some organic compounds into PEDOT : PSS aqueous solutions or by treating the PEDOT: PSS film with organic solvents, such as ethylene glycol (EG). 2-nitroethanol, methyl sulfoxide or 1-methyl-2-pyrrolidinone.

Han et al. ("Improving the performance of PEDOT-PSS coated sulfur@activated porous graphene composite cathodes for lithium-sulfur batteries". Journal of Material Chemistry A (2014), Vol. 2. pages 18345-18352) disclose a novel PEDOT-PSS coated sulfur@activated porous graphene composite (PEDOT/S@aPG) that is prepared by the impregnation of sulfur with aPG and encapsulation with PEDOT-PSS as the cathode material for lithium-sulfur batteries.

Yuan et al. ("Improving the Performance of Lithium-Sulfur Batteries bv Conductive Polymer Coating", ACS Nano (2011). Vol. 5 (11). pages 9187-9193) disclose that conductive polymer PEDOT : PSS coating on the surface of mesoporous carbon/sulfur particles could be used to effectively trap polysulfides and minimize the dissolution of polysulfides and the loss of active mass in cathodes, which leads to a notable improvement of the performance of Li-S batteries.

Duan et al. ("Fabrication of conductive polymer-coated sulfur composite cathode materials based on laver-by-laver assembly for rechargeable lithium-sulfur batteries", Colloids and Surfaces A: Physicochemical and Engineering Aspects (2012), Vol. 414,pages 98-103) disclose Layer-by-layer (LbL) assembly technique as a simple method to fabricate polymer-coated sulfur cathode materials for rechargeable lithium-sulfur batteries.

The present invention is generally based on the object of overcoming at least one of the problems encountered in the state of the art in relation to lithium-sulfur secondary batteries.

More specifically the present invention is further based on the object of providing compositions that can be used for the formation of a cathode material in a lithium-sulfur secondary batteries, wherein the composition can be easily prepared with a minimum amount of process steps.

Furthermore, the composition should also be characterized in that it displays a high sulfur loading and in that it can be prepared without using solvents having a low flash point.

Furthermore, the composition should allow the formation of a cathode in a lithium-sulfur secondary battery without the necessity of adding high amounts of binders and/or carbon-based materials.

A contribution to achieving at least one of the above described objects is made by the subject matter of the category forming claim of the present invention. A further contribution is made by the subject matter of the dependent claims which represent specific embodiments of the invention.

### EMBODIMENTS

|1| A liquid composition comprising
   a) at least one cationic polythiophene;
   b) at least one polymeric counterion;
   c) sulfur;
   d) at least one solvent having a boiling point of 80°C or more, preferably 85°C or more but not more than 100°C and more preferably 90°C or more but not more than 100°C;
   e) at least one conductivity improving agent;
   wherein the liquid composition comprises less than 10 wt.-%, preferably less than 5 wt.-% and more preferably less than 1 wt.-% of components having a boiling point of less than 80°C, in each case based on the total weight of the liquid composition, and wherein the boiling point in each case is determined at a pressure of 1013 mbar.
|2| The liquid composition according to embodiment |1|, wherein the composition comprises the least one conductivity improving agent e) in an amount of at least 0.1 wt.-%, preferably at least 0.5 wt.-% and more preferably at least 1 wt.-%, in each case based on the total amount of the liquid composition.
|3| The liquid composition according to embodiments |1| or |2|, wherein the liquid composition comprises the at least one solvent d) in an amount of at least 10 wt.%, preferably at least 20 wt.-% and more preferably at least 30 wt.-%, in each case based on the total weight of the liquid composition.
|4| The liquid composition according to embodiment |3|, wherein the weight ratio of the at least one solvent d) to the least one conductivity improving agent e) is in the range from 1 : 10 to 1000 : 1, preferably in the range from 1:1 to 150 : 1 and most preferably in the range from 5 : 1 to 100 : 1.
|5| The liquid composition according to any of the preceding embodiments, wherein solvent d) is water.
|6| The liquid composition according to any of the preceding embodiments, wherein the conductivity improving agent e) is liquid at 20°C and 1013 mbar and has a boiling point of more than 100°C, preferably more than 125°C and more preferably more than 150°C.
|7| The liquid composition according to any of embodiments |1| to |5|, wherein the conductivity improving agent e) is solid at 20°C and 1013 mbar.
|8| The liquid composition according to any of the preceding embodiments, wherein the conductivity improving agent e) is selected from the group consisting of ethylene glycol, propylene glycol, butylene glycol, hexylene glycol, diethylene glycol, dipropylene glycol, triethylene glycol, tripropylene glycol, tetraethylene glycol, tetrapropylene glycol, propylene glycol methyl ether, dipropylene glycol methyl ether, tripropylene glycol methyl ether, propylene glycol propyl ether, dipropylene glycol propyl ether, tripropylene glycol propyl ether, propylene glycol butyl ether, dipropylene glycol butyl ether, tripropylene glycol butyl ether, propylene glycol phenyl ether, dipropylene glycol dimethyl ether, diethylene glycol ethyl ether, diethylene glycol methyl ether, diethylene glycol butyl ether, diethylene glycol hexyl ether, ethylene glycol propyl ether, ethylene glycol butyl ether, ethylene glycol hexyl ether, triethylene glycol methyl ether, triethylene glycol ethyl ether, triethylene glycol butyl ether, ethylene glycol phenyl ether, ethylene glycol ethyl ether, tetrahydrofuran, butyrolactone, valerolactone, N-methyl caprolactam, N,N-dimethyl acetamide, N-methyl acetamide, N,N-dimethyl formamide (DMF), N-methyl formamide, N-methyl formanilide, N-methyl pyrrolidone (NMP), N-octyl pyrrolidone, pyrrolidone, sulpholane (tetramethylene sulphone), dimethyl sulphoxide (DMSO), glycerol, diglycerol, triglycerol or tetraglycerol, sucrose, glucose, fructose, lactose, sorbitol, mannitol, 2-furancarboxylic acid, 3-furancarboxylic acid and mixtures thereof.
|9| The liquid composition according to any of the preceding embodiments, wherein sulfur c) is elemental sulfur.
|10| The liquid composition according to any of the preceding embodiments, wherein the liquid composition comprises less than 5 wt.-%, preferably less than 2.5 wt.-% and more preferably less than 1 wt.-%, in each case based on the total weight of the liquid composition, of a particulate material based on elemental carbon, in particular less than 5 wt.-%, preferably less than 2.5 wt.-% and more preferably less than 1 wt.-%, in each based on the total weight of the liquid composition, of a particulate material based on elemental carbon on the surface of which sulfur is adsorbed, such as activated graphene sheets or carbon nanotubes.
|11| The liquid composition according to any of the preceding embodiments, wherein the amount of sulfur is at least 5 wt.-%, preferably at least 10 wt.-% and more preferably at least 25 wt.-%, in each case based on the total weight of the liquid composition.
|12| The liquid composition according to any of embodiments |1| to |9|, wherein the liquid composition further comprises
   f) elemental carbon.
|13| The liquid composition according to any of the preceding embodiments, wherein at least 0.1 wt.-%, preferably at least 10 wt.-% and more preferably at least 25 wt.-% of the total amount of component c) is undissolved in solvent d).
|14| The liquid composition according to any of the preceding embodiments, wherein the pH value of the liquid composition is in the range of from 1 to 8, preferably in the range from 1 to 7.5 and more preferably in the range from 1.5 to 7.
|15| The liquid composition according to any of the preceding embodiments, wherein the pH value of the liquid composition is in the range of from 6 to 8.
|16| The liquid composition according to any of the preceding embodiments, wherein the cationic polythiophene a) and the polymeric counterion b) are present in the form of a cationic polythiophene : polymeric counterion-complex.
|17| The liquid composition according to any of the preceding embodiments, wherein the cationic polythiophene a) is poly(3,4-ethylenedioxythiophene).
|18| The liquid composition according to any of the preceding embodiments, wherein the polymeric counterion is an anion of polystyrene sulfonic acid.
|19| The liquid composition according to any of the preceding embodiments, wherein the cationic polythiophene is obtainable by polymerization in the presence of the polymeric counterion b) and in the absence of oxygen.
|20| The liquid composition according to any of the preceding embodiments, wherein the total amount of cationic polythiophene a) and polymeric counterion b), preferably the total amount of PEDOT : PSS, in the liquid composition is preferably in the range from 0.01 to 30 wt.-%, preferably in the range from 0.1 to 20 wt.-% and even more preferred in the range from 0.5 to 10 wt.-%, in each case based on the total weight of the liquid composition.
|21| The liquid composition according to any of the preceding embodiments, wherein the liquid composition comprises less than 10 wt.-%, preferably less than 5 wt.-% and more preferably less than 1 wt.-%, in each case based on the total amount of the composition, of components having a flash point of less than 25°C.
|22| The liquid composition according to any of the preceding embodiments, wherein the liquid composition is free of methanol or ethanol.
|23| The liquid composition according to any of the preceding embodiments, wherein the liquid composition further comprises:
   g) a non-conductive polymer.
|24| The liquid composition according to embodiment |23|, wherein the non-conductive polymer g) is selected from the group consisting of polyesters, polyacrylate, polymethacrylates, polyurethanes, polyamides, polyimides, polyethers, vinyl polymers, polysaccharide, polyethylene oxide, gelatin, carboxymethyl cellulose, styrene-butadiene-rubber, poly(acrylamide-co-diallyl-methylammonium chloride), carbonyl-beta-cyclodextrine, polyvinyl alcohol, polyvinyl pyrrolidone, polyvinylidene fluoride, poly(tetrafluoroethylene), derivatives thereof, copolymers thereof, and a mixture of two or more thereof.
|25| A powdered composition comprising
   a) at least one cationic polythiophene;
   b) at least one polymeric counterion;
   c) sulfur;
   wherein the cationic polythiophene and the at least one polymeric counterion are present in the form of a cationic polythiophene : polymeric counterion-complex.
|26| The powdered composition according to embodiment |25|, wherein the powdered composition comprises less than 5 wt.-%, preferably less than 1 wt.-% and more preferably less than 0.1 wt.-%, in each case based on the total weight of the powdered composition, of a binder.
|27| The powdered composition according to any of embodiments |25| or |26|, wherein sulfur c) is elemental sulfur.
|28| The powdered composition according to any of embodiments |25| to |27|, wherein the amount of sulfur c) in the powdered composition is more than 50 wt.-%, preferably more than 60 wt.-%, more preferably more than 70 wt.-% and more preferably more than 80 wt.-%,, in each case based on the total weight of the composition.
|29| The powdered composition according to any of embodiments |25| to |28|, wherein the powdered composition comprises less than 30 wt.-%, preferably less than 20 wt.-% and more preferably less than 10 wt.-%, in each case based on the total weight of the powdered composition, of a particulate material based on elemental carbon, in particular less than 30 wt.-%, preferably less than 20 wt.-% and more preferably less than 10 wt.-%, in each based on the total weight of the powdered composition, of a particulate material based on elemental carbon on the surface of which sulfur is adsorbed, such as activated graphene sheets or carbon nanotubes.
|30| The powdered composition according to any of embodiments |25| to |29|, wherein the powdered composition further comprises
   f) elemental carbon.
|31| The powdered composition according to any of embodiments |25| to |30|, wherein the cationic polythiophene a) is poly(3,4-ethylenedioxythiophene).
|32| The powdered composition according to any of embodiments |25| to |31|, wherein the polymeric counterion is an anion of polystyrene sulfonic acid.
|33| The powdered composition according to any of embodiments |25| to |32|, wherein the total amount of cationic polythiophene a) and polymeric counterion b), preferably the total amount of PEDOT : PSS, in the powdered composition according to the present invention is preferably in the range from 0.05 to 30 wt.-%, preferably in the range from 0.5 to 20 wt.-% and even more preferred in the range from 1 to 10 wt.-%, in each case based on the total weight of the powdered composition.
|34| The powdered composition according to any of embodiments |25| to |33|, wherein the mass ratio of sulfur to the at least one cationic polythiophene is greater than 8 : 1, preferably greater than 15 : 1 and more preferably greater than 20 : 1.
|35| The powdered composition according to any of embodiments |25| to |34|, wherein the powdered composition further comprises:
   g) a non-conductive polymer.
|36| The powdered composition according to embodiment |35|, wherein the non-conductive polymer g) is selected from the group consisting of polyesters, polyacrylate, polymethacrylates, polyurethanes, polyamides, polyimides, polyethers, vinyl polymers, polysaccharide, polyethylene oxide, gelatin, carboxymethyl cellulose, styrene-butadiene-rubber, poly(acrylamide-co-diallylmethylammonium chloride), carbonyl-beta-cyclodextrine, polyvinyl alcohol, polyvinyl pyrrolidone, polyvinylidene fluoride, poly(tetrafluoroethylene), derivatives thereof, copolymers thereof, and a mixture of two or more thereof.
|37| A process for preparing a composition comprising the steps:
   i) providing a liquid pre-composition comprising at least one cationic polythiophene a), at least one polymeric counterion b) and at least one solvent d) having a boiling point of 80°C or more, preferably 85°C or more but not more than 100°C and more preferably 90°C or more but not more than 100°C, wherein the at least one cationic polythiophene a) and the at least one polymeric counterion b) are present in the form of a cationic polythiophene : polymeric counterion-complex;
   ii) mixing the liquid pre-composition obtained in process step i) with sulfur c);
   iii) mixing the liquid pre-composition obtained in process step i) or the composition obtained in process step ii) with at least one conductivity improving agent e);
   wherein the boiling point in each case is determined at a pressure of 1013 mbar and wherein the composition obtained by the process comprises less than 10 wt.-%, preferably less than 5 wt.-% and more preferably less than 1 wt.-% of components having a boiling point of less than 80°C, in each case based on the total weight of the composition.
|38| The process according to embodiment |37|, wherein sulfur c) is added in the form of elemental sulfur.
|39| The process according to embodiment |37| or |38|, wherein the cationic polythiophene
   a) is poly(3,4-ethylenedioxythiophene).
|40| The process according to any of embodiments |37| to |39|, wherein the polymeric counterion is an anion of polystyrene sulfonic acid.
|41| The process according to any of embodiments |37| to |40|, wherein during or after process step ii) the mixture is subjected to shearing.
|42| The process according to any of embodiments |37| to |41|, wherein at least 0.1 wt.-%, preferably at least 10 wt.-% and more preferably at least 25 wt.-% of the total amount of component c) remain unsolved in solvent d).
|43| The process according to any of embodiments |37| to |42|, wherein the process is carried out in the presence of less than 10 wt.-%, preferably less than 5 wt.-% and more preferably less than 1 wt.-%, in each case based on the total weight of the liquid composition, of components with a flash point of less that 25°C.
|44| The process according to any of embodiments |37| to |43|, wherein the process further comprises the step:
   iv) adjusting the pH of the liquid composition before, during or after step ii).
|45| The process according to any of embodiments |37| to |44|, wherein the process further comprises the step:
   v) removing at least part of solvent d) from the composition that is obtained by the process to obtain a powdered composition.
|46| A liquid composition obtainable by the process according to any of embodiments |37| to |44|.
|47| A powdered composition, obtainable by the process according to embodiment |45|.
|48| A lithium-sulfur electrochemical cell comprising a first electrode that has been produced by superimposing a substrate with the liquid composition according to one of embodiments |1| to |24| or |46| and by subsequently removing at least a part of solvent d1), thereby obtaining a substrate that is superimposed with an electrically conductive layer.
|49| The lithium-sulfur electrochemical cell according to embodiment |48|, wherein the cell further comprises a second electrode based on at least one lithium-containing compound.
|50| The lithium-sulfur electrochemical cell according to embodiment |49|, wherein the lithium-containing compound is selected from the group consisting of lithium metal (Li or Li⁰ anode), lithiated silicon, lithiated tin or another lithium-containing material.
|51| The lithium-sulfur electrochemical cell according to any of embodiments |48| to |50| further comprising a separator separating the first and the second electrode.
|52| The lithium-sulfur electrochemical cell according to embodiment |51|, wherein the separator is a porous membrane.
|53| The lithium-sulfur electrochemical cell according to any of embodiments |48| to |52| further comprising an electrolyte.
|54| The lithium-sulfur electrochemical cell according to embodiment |53|, wherein the electrolyte is selected from the group consisting of liquid electrolytes and electrolytes based on polymers in the form of solid to gelatinous films or a combination thereof.
|55| The lithium-sulfur electrochemical cell according to embodiment |53| or |54|, wherein the electrolyte is a liquid electrolyte comprising a lithium salt being dissolved in an aprotic solvent.
|56| The lithium-sulfur electrochemical cell according to embodiment |55|, wherein the lithium salt is selected from the group consisting of LiPF₆, LiClO₄, lithium bis(oxalato)borate (LiBOB) or a mixture of at least two thereof.
|57| The lithium-sulfur electrochemical cell according to embodiment |55| or |56|, wherein the aprotic solvent is selected from the group consisting of ethylene carbonate, propylene carbonate, dimethyl carbonate, diethyl carbonate, 1,2-dimethoxyethane, sulfolan, toluene, dimethyl ether, diethyl ether, diglyme, tetraglyme or a mixture of at least two thereof.
|58| The use of the liquid composition according to one of embodiments |1| to |24| or |46| or of the powdered composition according to one of embodiments |25| to |36| or |47| for the production of an electrode in a lithium-sulfur electrochemical cell, in particular of a lithium-sulfur electrochemical cell as defined in embodiments |48| to |57|.

The present invention relates to a process for the production of a first electrode in a lithium-sulfur electrochemical cell,
- wherein a substrate is superimposed with a liquid composition comprising
   a) at least one cationic polythiophene;
   b) at least one polymeric counterion;
   c) elemental sulfur;
   d) at least one solvent having a boiling point of 80°C or more, preferably 85°C or more but not more than 100°C and more preferably 90°C or more but not more than 100°C, wherein the at least one solvent d) is water;
   e) at least one conductivity improving agent selected from the group consisting of a monoalkylene glycol, a dialkylene glykol, a trialkylene glycol, a tetraalkylene glycol, a mono- or diether of these mono-, di-, tri- oder tetraalkylene glycols, a lactone group-comprising compound, a amide group- or lactam group-comprising compound, a sulphone or sulphoxide. a sugar or sugar derivative, a sugar alcohol or a furan derivative, glycerol, diglycerol, triglycerol, tetraglycerol or a mixture of at least two thereof;
   wherein the liquid composition comprises less than 10 wt.-%, preferably less than 5 wt.-% and more preferably less than 1 wt.-% of components having a boiling point of less than 80°C, in each case based on the total weight of the liquid composition, and wherein the boiling point in each case is determined at a pressure of 1013 mbar
- and wherein subsequently at least a part of solvent d) is removed, thereby obtaining a substrate that is superimposed with an electrically conductive layer;
characterized in that the liquid composition comprises less than 5 wt.-%. based on the total weight of the liquid composition, of a particulate material based on elemental carbon.

In this context it may be particularly advantageous that the liquid composition used in the process according to the present invention is completely free of components having a boiling point of less than 80°C, such as ethanol or methanol.

Surprisingly it has been discovered that a simple blend of a liquid composition comprising at least one solvent a having a boiling point of 80°C or more and cationic polythiophene complexed with a polymeric counterion, such as an anion of polystyrene sulfonic acid, with sulfur and a conductivity improving agent, in particular a conductivity improving agent that is a high boiling solvent, allows the facile deposition of sulfur films with high sulfur loadings and good conductivity that can be used as cathode in lithium-sulfur batteries. The advantage of this approach can be seen in the fact that such a composition in the form of a slurry can easily be prepared by mixing, for example, a PEDOT : PSS-dispersion with sulfur and a conductivity improving agent, followed by a milling step. There is no need to add binders, components having a boiling point of less than 80°C or carbon based materials. Due to the fact the polymeric material in this composition is not only conductive, but has also film-forming properties, high loadings with sulfur are possible.

The liquid composition used in the process according to the present invention can be present in the form of a solution, a dispersion or an emulsion. However, according to a particularly preferred embodiment of the liquid composition used in the process according to the present invention the liquid composition is present in the form of a mixture of a pulverized solid and a liquid, often also referred to as a *"slurry".* In this context it is particularly advantageous that in the liquid composition used in the process according to the present invention at least 0.1 wt.-%, preferably at least 10 wt.-% and more preferably at least 25 wt.-% of the total amount of component c) is undissolved in solvent d) (or in the mixture of solvents d) in the case of two or more of these solvents)

As component a) the liquid composition comprises a cationic polythiophene. Preferred polythiophenes are those having repeating units of the general formula (I) or (II) or a combination of units of the general formulas (I) and (II), preferably a polythiophene with repeating units of the general formula (II): 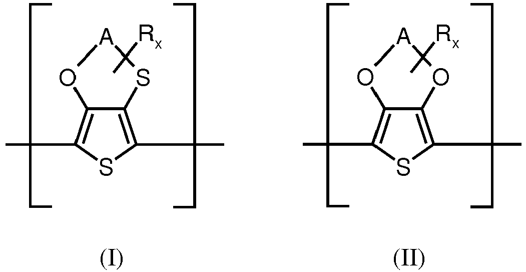 wherein
- A: represents an optionally substituted C₁-C₅-alkylene radical,
- R: represents a linear or branched, optionally substituted C₁-C₁₈-aliphatic or heteroaliphatic radical, an optionally substituted C₅-C₁₂-cycloaliphatic or cycloheteroaliphatic alkyl radical, an optionally substituted C₆-C₁₄-aryl or heteroaryl radical, an optionally substituted C₇-C₁₈-aralkyl or heteroaralkyl radical, an optionally substituted C₁-C₄-hydroxyaliphatic or hydroxyheteroalphatic radical or a hydroxyl radical,
- x: represents an integer from 0 to 8 and
in the case where several radicals R are bonded to A, these can be identical or different.

The general formulae (I) and (II) are to be understood as meaning that x substituents R can be bonded to the alkylene radical A.

Polythiophenes having recurring units of the general formula (IV) wherein A represents an optionally substituted C₂-C₃-alkylene radical and x represents 0 or 1 are particularly preferred.

In the context of the invention, the prefix *"p*o*ly*" is to be understood as meaning that the polythiophene comprises more than one identical or different recurring unit of the general formulae (I) and (II). In addition to the recurring units of the general formulae (I) and/or (II), the polythiophenes can optionally also comprise other recurring units, but it is preferable for at least 50 %, particularly preferably at least 75 % and most preferably at least 95 % of all the recurring units of the polythiophene to have the general formula (I) and/or (II), preferably the general formula (II). The percentage figures stated above are intended here to express the numerical content of the units of the structural formula (I) and (II) in the total number of monomer units in the conductive polymer. The cationic polythiophenes comprise a total of n recurring units of the general formula (I) and/or (II), preferably of the general formula (II), wherein n is an integer from 2 to 2,000, preferably 2 to 100. The recurring units of the general formula (I) and/or (II), preferably of the general formula (II), can in each case be identical or different within a cationic polythiophene. Cationic polythiophenes having in each case identical recurring units of the general formula (II) are preferred.

Preferably at least 50 %, particularly preferably at least 75 %, still more preferably at least 95 % and most preferably 100 % of all the recurring units of the cationic polythiophene are 3,4-ethylenedioxythiophene units.

According to a particularly preferred embodiment of the liquid composition used in the process according to the present invention the at least one cationic polythiophene a) therefore is poly(3,4-ethylenedioxy-thiophene) (PEDOT).

The polythiophenes preferably in each case carry H on the end groups.

In the context of the invention, C₁-C₅-alkylene radicals A are preferably methylene, ethylene, n-propylene, n-butylene or n-pentylene. C₁-C₁₈-Alkyl radicals R preferably represent linear or branched C₁-C₁₈-alkyl radicals, such as methyl, ethyl, n- or iso-propyl, n-, iso-, sec- or tert-butyl, n-pentyl, 1-methylbutyl, 2-methylbutyl, 3-methylbutyl, 1-ethylpropyl, 1,1-dimethylpropyl, 1,2-dimethylpropyl, 2,2-dimethylpropyl, n-hexyl, n-heptyl, n-octyl, 2-ethylhexyl, n-nonyl, n-decyl, n-undecyl, n-dodecyl, n-tridecyl, n-tetradecyl, n-hexadecyl or n-octadecyl, C₅-C₁₂-cycloalkyl radicals R represent, for example, cyclopentyl, cyclohexyl, cycloheptyl, cyclooctyl, cyclononyl or cyclodecyl, C₅-C₁₄-aryl radicals R represent, for example, phenyl or naphthyl, and C₇-C₁₈-aralkyl radicals R represent, for example, benzyl, o-, m-, p-Tolyl, 2,3-, 2,4-, 2,5-, 2,6-, 3,4-, 3,5-xylyl or mesityl. The preceding list serves to illustrate the invention by way of example and is not to be considered conclusive.

In the context of the invention, numerous organic groups are possible as optionally further substituents of the radicals A and/or of the radicals R of formulas (III) or (IV), for example alkyl, cycloalkyl, aryl, aralkyl, alkoxy, halogen, ether, thioether, disulphide, sulphoxide, sulphone, sulphonate, amino, aldehyde, keto, carboxylic acid ester, carboxylic acid, carbonate, carboxylate, cyano, alkylsilane and alkoxysilane groups and carboxamide groups.

The polythiophenes a) are cationic, *"cationic"* relating only to the charges on the polythiophene main chain. The positive charges are not shown in the formulae, since their precise number and position cannot be determined absolutely. However, the number of positive charges is at least 1 and at most n, where n is the total number of all recurring units (identical or different) within the polythiophene.

As component b) the liquid composition comprises at least one polymeric counter-ion to compensate the positive charge of the polythiophene a). Polymeric counterions b) can be, for example, anions of polymeric carboxylic acids, such as polyacrylic acids, polymethacrylic acid or polymaleic acids, or of polymeric sulphonic acids, such as polystyrenesulphonic acids and polyvinylsulphonic acids. These polycarboxylic and -sulphonic acids can also be copolymers of vinylcarboxylic and vinylsulphonic acids with other polymerizable monomers, such as acrylic acid esters and styrene. Particularly preferably, the solid electrolyte comprises an anion of a polymeric carboxylic or sulphonic acid for compensation of the positive charge of the polythiophene. The anion of polystyrenesulphonic acid (PSS) is particularly preferable if poly(3,4-ethylenedioxythiophene) is used as the cationic polythiophene a).

According to a particularly preferred embodiment of the liquid composition used in the process according to the present invention the cationic polythiophene a) and the polymeric counterion b) are present in the form of a cationic polythiophene : polymeric counterion-complex, in particular in the form of a PEDOT : PSS-complex.

Such ionic complexes are obtainable by polymerizing the thiophene monomers, preferably 3,4-ethylenedioxythiophene, oxidatively in aqueous solution in the presence of the polymeric counterion, preferably an anion of polystyrenesulphonic acid. Details of this process can be found, for example, in chapter 9.1.3 in "PEDOT · Principles and Applications of an Intrinsically Conductive Polymer", Elschner et al., CRC Press (2011). In this context it is also preferred that the cationic polythiophene b) is obtainable by polymerization in the presence of the polymeric counterion b) and in the absence of oxygen.

The molecular weight of the polymeric counterions b) is preferably 1,000 to 2,000,000, particularly preferably 2,000 to 500,000. The polymeric counterions are commercially obtainable, e.g. polystyrenesulphonic acids and polyacrylic acids, or can be prepared by known processes (see e.g. Houben Weyl, Methoden der organischen Chemie, vol. E 20 Makromolekulare Stoffe, part 2, (1987), p. 1141 et seq.).

The total amount of cationic polythiophene a) and polymeric counterion b), preferably the total amount of PEDOT : PSS, in the liquid composition used in the process according to the present invention is preferably in the range from 0.01 to 30 wt.-%, preferably in the range from 0.1 to 20 wt.-% and even more preferred in the range from 0.5 to 10 wt.-%, in each case based on the total weight of the liquid composition.

As component c) the liquid composition comprises sulfur, wherein the sulfur is present in the form of elemental sulfur. Sulfur c) can be any present in the liquid composition used in the process according to the present invention in any form of solid elemental sulfur, including crystalline sulfur, amorphous sulfur, precipitated sulfur, sublimed sulfur, sulfur solidified from the melt or a mixture of at least two of these sulfur modifications. Preferably, sulfur is present in the form of dispersed particles, wherein the particle size of the sulfur particles in the liquid composition is preferably less than 50 µm, more preferably less than 25 µm, even more preferably less than 10 µm and even more preferably less than 5 µm.

The amount of sulfur c) in the liquid composition used in the process according to the present invention can be at least 5 wt.-%, preferably at least 10 wt.-% and more preferably at least 25 wt.-%, in each case based on the total weight of the liquid composition. Preferably, the amount of sulfur c) in the liquid composition according to the present invention is less than 99 wt.-%, preferably less than 95 wt.-% and more preferably less than 90 wt.-%, in each case based on the total weight of the liquid composition.

It is particularly preferred that in the liquid composition used in the process according to the present invention sulfur c) is predominantly not adsorbed to the surface of a particulate material based on elemental carbon, such as a graphene sheet or a carbon nanotube, but is present in the form of sulfur particles that are freely dispersed in the liquid composition. In this context it is preferred that according to one specific embodiment of the liquid composition the composition comprises less than 2.5 wt.-% and more preferably less than 1 wt.-%, in each case based on the total weight of the liquid composition, of a material based on elemental carbon, in particular less than 5 wt.-%, preferably less than 2.5 wt.-% and more preferably less than 1 wt.-%, in each based on the total weight of the liquid composition, of a particulate material based on elemental carbon on the surface of which sulfur is adsorbed, such as activated graphene sheets or carbon nanotubes. According to one embodiment of the liquid composition used in the process according to the present invention the liquid composition is completely free of any particulate material based on elemental carbon.

However, according to a further specific embodiment of the liquid composition used in the process according to the present invention the composition may also comprise elemental carbon f). Suitable examples of such materials comprise carbon black, such as those materials that are commercially available under the tradenames Ketjenblack® (manufactured by the Ketjen Black International Company), Super P® (manufactured by the Timcal), Super C45® or Super C65® (manufactured by the Timcal Graphite & Carbon Inc.), graphite, graphene, vapor grown carbon fiber (VGCF), carbon nanotubes (CNTs) or other conductive micro-, meso- and macroporous carbon materials, such as Porocarb from Heraeus Quarzglas GmbH.

The liquid composition also comprises water as at least one solvent d) having a boiling point of 0°C or more, preferably 85°C or more but not more than 100°C and more preferably 90°C or more but not more than 100°C. These boiling points are in each case determined at a pressure of 1013 mbar. The composition also comprises at least one conductivity improving agent e) selected from the group consisting of a monoalkylene glycol, a dialkylene glykol, a trialkylene glycol, a tetraalkylene glycol, a mono- or diether of these mono-, di- tri- oder tetraalkylene glycols, a lactone group-compnsing compound, a amide group- or lactam group-comprising compound, a sulphone or sulphoxide, a sugar or sugar derivative, a sugar alcohol or a furan derivative, glycerol, diglycerol, triglycerol, tetraglycerol or a mixture of at least two thereof. As a *"conductivity improving agent e)"* any compound can be use that, when being added to an aqueous PEDOT/PSS-dispersion leads to an increase of the specific surface resistance of a conductive layer prepared by applying the PEDOT/PSS-dispersion onto the surface of a glass substrate and subsequently drying the aqueous PEDOT/PSS-film. Preferably, the conductivity improving agent e) leads to a decrease of the specific surface resistance by at least 5 %, preferably by at least 10 % and more preferably by at least 20 %.

In this context it is preferred that the liquid composition comprises the at least one solvent d) in an amount of at least 0.1 wt.-%, preferably at least 0.5 wt.-% and more preferably at least 1 wt.-%, in each case based on the total amount of the liquid composition. The maximum amount of solvent d) in the liquid composition according to the present invention is preferably less than 50 wt.-% preferably less than 25 wt.-% and more preferably less than 10 wt.-%, in each case based on the total amount of the liquid composition. If the composition comprises two or more solvents d), the above mentioned amounts refer to the total amount of these solvents. Furthermore, the liquid composition may comprise the conductivity improving agent e) in an amount of at least 10 wt.%, preferably at least 20 wt.-% and more preferably at least 30 wt.-%, in each case based on the total weight of the liquid composition. The maximum amount of the conductivity improving agent e) in the liquid composition according to the present invention is preferably less than 99.9 wt.-% preferably less than 90 wt.-% and more preferably less than 80 wt.-%, in each case based on the total amount of the liquid composition. If the composition comprises two or more conductivity improving agents e), the above mentioned amount refer to the total amount of these agents. Also, the weight ratio of the solvent d) to the conductivity improving agent e) is preferably in the range from 1 : 10 to 1000 : 1, preferably in the range from 1 : 1 to 150 : 1 and mot preferably in the range from 5 : 1 to 100 : 1. Again, if the composition comprises two or more solvents d) or two or more conductivity improving agents e), these weight ratios correspond to the weight ration total amount of solvent: total amount of conductivity improving agent.

According to a first particular embodiment of the liquid composition used in the process according to the present invention the conductivity improving agent e) is liquid at 20°C and 1013 mbar and has a boiling point of more than 100°C, preferably more than 125°C and more preferably more than 150°C.

According to a second particular embodiment of the liquid composition used in the process according to the present invention the conductivity improving agent e) is solid at 20°C and 1013 mbar.

The conductivity improving agent e) is selected from the group consisting of an monoalkylene glycol, a dialkylene glykol, a trialkylene glycol, a tetraalkylene glycol, a mono- or diether of these mono-, di-, tri- oder tetraalkylene glycols, a lactone group-comprising compounds, a amide group- or lactam group-comprising compound, a sulphones or sulphoxide, sugars or sugar derivatives, sugar alcohols or furan derivatives, such as e.g. 2-furancarboxylic acid, 3-furancarboxylic acid, glycerol, diglycerol, triglycerol, tetraglycerol or a mixture of at least two thereof. Particularly preferred as the conductivity improving agent e) are ethylene glycol, propylene glycol, butylene glycol, hexylene glycol, diethylene glycol, dipropylene glycol, triethylene glycol, tripropylene glycol, tetraethylene glycol, tetrapropylene glycol, propylene glycol methyl ether, dipropylene glycol methyl ether, tripropylene glycol methyl ether, propylene glycol propyl ether, dipropylene glycol propyl ether, tripropylene glycol propyl ether, propylene glycol butyl ether, dipropylene glycol butyl ether, tripropylene glycol butyl ether, propylene glycol phenyl ether, dipropylene glycol dimethyl ether, diethylene glycol ethyl ether, diethylene glycol methyl ether, diethylene glycol butyl ether, diethylene glycol hexyl ether, ethylene glycol propyl ether, ethylene glycol butyl ether, ethylene glycol hexyl ether, triethylene glycol methyl ether, triethylene glycol ethyl ether, triethylene glycol butyl ether, ethylene glycol phenyl ether, ethylene glycol ethyl ether, tetrahydrofuran, butyrolactone, valerolactone, N-methyl caprolactam, N,N-dimethyl acetamide, N-methyl acetamide, N,N-dimethyl formamide (DMF), N-methyl formamide, N-methyl formanilide, N-methyl pyrrolidone (NMP), N-octyl pyrrolidone, pyrrolidone, sulpholane (tetramethylene sulphone), dimethyl sulphoxide (DMSO), glycerol, diglycerol, triglycerol or tetraglycerol, sucrose, glucose, fructose, lactose, sorbitol, mannitol, 2-furancarboxylic acid, 3-furancarboxylic acid and mixtures thereof.

According to a preferred embodiment of the liquid composition used in the process according to the present invention the composition comprises less than 10 wt.-%, preferably less than 5 wt.-% and more preferably less than 1 wt.-%, in each case based on the total amount of the composition, of components having a flash point of less than 25°C. In this context it may be particularly advantageous that the liquid composition used in the process according to the present invention is completely free of components having a flash point of less than 25°C. Components having a flash point of less than 25°C and which may be comprises in the liquid composition used in the process according to the present invention in the amounts specified above or which may not be comprises at all in the liquid composition used in the process according to the present invention may be selected from the group consisting of methanol, ethanol, propanol or a mixture of at least two thereof.

According to a further preferred embodiment of the liquid composition used in the process according to the present invention the composition may also comprise a non-conductive polymer g), wherein the non-conductive polymer preferably serves as a binder. Particularly preferred non-conductive polymers f) are polymers selected from the group consisting of polyesters, polyacrylate, polymethacrylates, polyurethanes, polyamides, polyimides, polyethers, vinyl polymers, polysaccharide, polyethylene oxide, gelatin, carboxymethyl cellulose, styrene-butadiene-rubber, poly(acrylamide-co-diallylmethylammonium chloride), carbonyl-beta-cyclodextrine, polyvinyl alcohol, polyvinyl pyrrolidone, polyvinylidene fluoride, poly(tetrafluoroethylene), derivatives thereof, copolymers thereof, and a mixture of two or more thereof. The amount of such non-conductive polymers f), if present, is preferably in the range from 0.1 to 30 wt.-%, more preferably in the range from 0.5 to 20 wt.-% and more preferably in the range from 1 to 10 wt.-%, in each case based on the total amount of the liquid composition.

Besides components a), b), c), d), e) and optionally f) and g) the liquid composition may also comprise one or more further additives such as crosslinking agents, viscosity modifiers or pH-regulators.
- Suitable crosslinking agents are melamine compounds, masked isocyanates, functional silanes - e.g. tetraethoxysilane, alkoxysilane hydrolysates, e.g. based on tetraethoxysilane, epoxysilanes, such as 3-glycidoxypropyltrialkoxysilane, epoxides or oxetanes, amines, quaternary amines, polyamines or quaternary polyamines.
- Suitable viscosity modifiers are hydroxypropyl methylcellulose (HPMC), methyl cellulose, ethyl cellulose, xanthan gum, polyvinyl alcohol, carboxy methyl cellulose, and hydroxy ethyl cellulose.
- Suitable pH regulators are acids and bases which do not influence film production. Possible bases are amines and primary, tertiary or alkylamines.

Preferably, the pH of the liquid composition used in the process according to the present invention is in the range of from 1 to 8, preferably in the range from 1 to 7.5 and more preferably in the range from 1.5 to 7, in each case determined at 25°C. According to a particular embodiment of the liquid composition used in the process according to the present invention, however, the pH of the liquid composition is in a range from 6 to 8.

The viscosity of the liquid composition used in the process according to the present invention is preferably less than 50,000 mPa·s (measured at 20 °C with a rotational viscosimeter Haake Viscotester VT-02, 62.5 rpm, rotor No. 1), more preferably less than 25,000 mPa·s and even more preferably less than 10,000 mPa·s. Moreover, the viscosity of the liquid composition used in the process according to the present invention is preferably at least 10 mPa·s, more preferably at least 100 mPa·s and most preferably at least 1000 mPa·s.

Also disclosed herein is a powdered composition comprising
a) at least one cationic polythiophene;
b) at least one polymeric counterion;
c) sulfur;
wherein the cationic polythiophene and the at least one polymeric counterion are present in the form of a cationic polythiophene : polymeric counterion-complex.

The powdered composition can be obtained, for example, by drying the liquid composition used in the process according to the present invention (i. e. by removing at least a part of the at least one solvent d)) and optionally by subsequently grinding the resultant solid.

The powdered composition can also be used to prepare conductive layers such as an electrode in a lithium-sulfur electrochemical cell. For that purpose the powdered composition can be redispersed, preferably in the form of a slurry as described above, in an appropriate solvent or solvent mixture. A substrate can then be at least partially superimposed with the liquid composition thus obtained and upon removal of at least a part of the solvent a conductive layer is formed. As a solvent or solvent mixture any solvent or solvent mixture can be used in which the powdered composition can be dispersed in the form of a slurry. Suitable solvents do not only comprise those solvents that have been mentioned as solvent d) in connection with the liquid composition used in the process according to the present invention, but also other solvents such as acetonitrile. Furthermore the powdered composition can also be formed into an electrode by a compression method, for example by means of roll pressing. In this context the powdered composition can be supplemented with further binder materials such PTFE-powder.

Preferred cationic polymers a) and polymeric counterions b) are those cationic polymers and polymeric counterions that have already been mentioned as preferred embodiments in connection with the liquid composition used in the process according to the present invention. The total amount of cationic polythiophene a) and polymeric counterion b), preferably the total amount of PEDOT : PSS, in the powdered composition is preferably in the range from 0.05 to 30 wt.-%, preferably in the range from 0.5 to 20 wt.-% and even more preferred in the range from 1 to 10 wt.-%, in each case based on the total weight of the powdered composition.

With respect to sulfur that is present as component c) in the powdered composition this component is preferably present in the form of elemental sulfur. Sulfur c) can be any present in the powdered composition in any form of solid elemental sulfur, including crystalline sulfur, amorphous sulfur, precipitated sulfur, sublimed sulfur, sulfur solidified from the melt or a mixture of at least two of these sulfur modification.

According to a preferred embodiment of the powdered composition the amount of sulfur in the powder composition is more than 50 wt.-%, preferably more than 60 wt.-%, more preferably more than 70 wt.-% and even more preferably more than 80 wt.-%, in each case based on the total weight of the composition. It is furthermore preferred that in the powdered composition the mass ratio of sulfur to the at least one cationic polythiophene is greater than 8 : 1, preferably greater than 15 : 1 and more preferably greater than 20 : 1.

As it is the case for the liquid composition used in the process according to the present invention it is also particularly preferred that in the powdered composition sulfur c) is predominantly not adsorbed to the surface of a particulate material based on elemental carbon, such as a graphene sheet or a carbon nanotube. In this context it is preferred that according to one specific embodiment of the powdered composition the composition comprises less than 30 wt.-%, preferably less than 20 wt.-% and more preferably less than 10 wt.-%, in each case based on the total weight of the powdered composition, of a particulate material based on elemental carbon, in particular less than 30 wt.-%, preferably less than 20 wt.-% and more preferably less than 10 wt.-%, in each based on the total weight of the powdered composition, of a particulate material based on elemental carbon on the surface of which sulfur is adsorbed, such as activated graphene sheets or carbon nanotubes. According to one embodiment of the powdered composition the powdered composition is completely free of any a material based on elemental carbon.

However, according to a further specific embodiment of the powdered composition the composition may also comprise elemental carbon f). Suitable examples of such materials are those that have already been mentioned in connection with the liquid composition used in the process according to the present invention. According to this particular embodiment the amount of elemental carbon f) can be in the range from 0.1 to 30 wt.-%, preferably in the range from 0.5 to 20 wt.-% and more preferably in the range from 1 to 10 wt.-%, in each case based on the total amount of the powdered composition.

According to a particular embodiment of the powdered composition the powdered composition comprises less than 5 wt.-%, preferably less than 1 wt.-% and more preferably less than 0.1 wt.-%, in each case based on the total weight of the powdered composition, of a binder. According to a further particular embodiment of the powdered composition the powdered composition is free of a binder.

Also disclosed herein is a process of preparing a composition comprising the steps:
i) providing a liquid pre-composition comprising at least one cationic polythiophene a), at least one polymeric counterion b) and at least one solvent d) having a boiling point of 80°C or more, preferably 85°C or more but not more than 100°C and more preferably 90°C or more but not more than 100°C, wherein the at least one cationic polythiophene a) and the at least one polymeric counterion b) are present in the form of a cationic polythiophene : polymeric counterion-complex;
ii) mixing the liquid pre-composition obtained in process step i) with sulfur c);
iii) mixing the liquid pre-composition obtained in process step i) or the composition obtained in process step ii) with at least one conductivity improving agent e);
wherein the boiling point in each case is determined at a pressure of 1013 mbar and wherein the composition obtained by the process comprises less than 10 wt.-%, preferably less than 5 wt.-% and more preferably less than 1 wt.-% of components having a boiling point of less than 80°C, in each case based on the total weight of the composition. According to a particular embodiment of the process of preparing a composition the composition obtained by the process is free of components having a boiling point of less than 80°C.

Preferred cationic polythiophenes a), polymeric counterions b), solvents d) and conductivity improving agents e) are those polythiophenes, polymeric counterions, solvents and conductivity improving agents that have already been described as preferred embodiments in connection with the liquid composition used in the process according to the present invention.

In process step i) of the process of preparing a composition a liquid pre-composition is provided comprising at least one cationic polythiophene a), at least one polymeric counterion b) and at least one solvent d) having a boiling point of 80°C or more, wherein the at least one cationic polythiophene a) and the at least one polymeric counterion b) are present in the form of a cationic polythiophene : polymeric counterion-complex. Such a cationic polythiophene : polymeric counterion-complex can be prepared by oxidatively polymerizing the thiophene monomers on which the cationic polythiophene a) is based, particularly preferred 3,4-ethylene-dioxythiophene, in the presence of the polymeric counterion b) in solvent d), preferably in water.

Any oxidising agent that is suitable for the oxidative polymerisation of the thiophene monomers on which the cationic polythiophenes a) are based can be used as oxidising agents. For practical reasons, inexpensive and easy-to-handle oxidising agents are preferred, for example iron(III) salts, such as FeCl₃ Fe(ClO₄)₃ and the iron (III) salts of organic acids and organic radicals of inorganic acids containing further H₂O₂ K₂Cr₂O₇ alkali and ammonium persulphates, alkali perborates, potassium permanganate and copper salts such as copper tetrafluoroborate. The use of persulfate and ferric salts of organic acids and inorganic acids containing organic radicals has the great applicational advantage that they are not corrosive. As ferric salts of inorganic acids containing organic radicals such as the ferric salts of sulfuric acid half esters of C₁-C₂₀ alkanols are, for example, as mentioned, the iron (III) salt of lauryl sulphates. As ferric salts of organic acids are, for example: the iron(III) salts of C₁-C₂₀ alkyl sulfonic acids, such as methane and dodecane; aliphatic C₁-C₂₀ carboxylic acids such as 2-ethylhexyl; aliphatic perfluorocarboxylic acids such as trifluoroacetic acid and perfluorooctanoic acid; aliphatic dicarboxylic acids such as oxalic acid and, in particular from aromatic, optionally substituted by C₁-C₂₀ alkyl substituted sulfonic acids such as benzenesulfonic acid, p-toluenesulfonic acid and dodecylbenzenesulfonic acid.

In this context it may also be advantageous to perform the oxidative polymerisation of the thiophene monomers under an atmosphere having a reduced oxygen content as it is described, for example, in WO 03/048227 A1. The reduction of the oxygen content can, for example, be accomplished by stirring the components used to prepare the liquid composition that is provided in process step i) under a reduced pressure or by degasing these components using an inert gas such as N₂ or CO₂. After the preparation of the liquid composition that is provided in process step i) these compostions are preferably treated with basic and acidic ion exchangers for the removal of inorganic salts. The solid content of the liquid pre-composition that is provided in process step i), preferably the solid content of the aqueous PEDOT : PSS dispersion, is preferably in the range from 0.01 to 15 wt.-%, more preferably 0.1 to 10 wt.-% and more preferably 1 to 5 wt.-%, in each case based on the total weight of the liquid composition. The weight ratio of the cationic polythiophene : polymeric counterion, preferably the weight ratio of PEDOT : PSS is preferably in the range from 1 : 0.5 to 1 : 50, preferably in the range from 1 : 1 to 1 : 30 and even more preferably in the range from 1 : 2 to 1 : 15.

Besides components a), b) and d) the liquid pre-composition may comprise further components, in particular those crosslinking agents, viscosity modifiers or pH-regulators that have already been mentioned as preferred additives in connection with the liquid composition used in the process according to the present invention.

In process step ii) of the process of preparing a composition the liquid pre-composition obtained in process step i) is mixed with sulfur c).

In this context it is particularly preferred that sulfur c) used in the process of preparing a composition is in the form of elemental sulfur, including crystalline sulfur, amorphous sulfur, precipitated sulfur, sublimed sulfur, sulfur solidified from the melt or a mixture of at least two of these sulfur modifications. In this context it is particularly preferred that the sulfur that is used in process step ii) is predominantly not adsorbed to the surface of a particulate material based on elemental carbon, such as a graphene sheet or a carbon nanotube.

Mixing of sulfur with the liquid pre-composition that has been provided in process step i), preferably with an aqueous PEDOT : PSS dispersion can be accomplished in any manner the person skilled in the art considers as appropriate for mixing liquid components such as PEDOT : PSS dispersions with powdered materials such as elemental sulfur. Suitable mixing devices include, but are not limited to, static mixers, Ultra-Turrax mixers screw mixers, disk mixers, plowshare mixers, paddle mixers, ribbon blender screws, SCHUGI mixers and continuous flow mixers.

The components are mixed in process step ii) to such an extent that a liquid composition comprising the cationic polythiophene a), the polymeric counterion b), the at least one solvent d) and sulfur c) is obtained, wherein the liquid composition can be a solution, a dispersion or an emulsion. However, according to a particularly preferred embodiment of the process of preparing a composition the components are mixed in process step ii) to such an extent that a slurry of these components is obtained. In this context it is again particularly advantageous that in the liquid composition obtained in process step ii) at least 0.1 wt.-%, preferably at least 10 wt.-% and more preferably at least 25 wt.-% of the total amount of component c) is undissolved in solvent d) (or, if a mixture of two or more solvents d) is used, in the mixture of the solvents).

According to a particularly preferred embodiment of the process of preparing a composition during or after process step ii) the mixture is subjected to shearing. This can be accomplished with a mechanical shearing treatment selected from air milling, air jet milling, pressurized fluid milling, bead milling, rotating blade grinding, ultrasonicating, or a combination thereof. In this context it is particularly preferred to accomplish shearing of the mixing components by bead milling. A suitable bead milling process is, for example, disclosed in US 7,300,512 B2. In this context it is particularly preferred to apply shearing forces to such an extent that, if particulate elemental sulfur is used in process step ii), the particle size of the sulfur particles in the composition is reduced to less than 50 µm, more preferably to less than 25 µm, even more preferably to less than 10 µm and even more preferably to less than 5 µm.

In process step iii) of the process of preparing a composition the liquid pre-composition obtained in process step i) or the composition obtained in process step ii) is mixed with at least one conductivity improving agent e). The conductivity improving agent e) can thus be added to the liquid pre-composition obtained in process step i) before sulfur c) is added in process step i) but it can also be added after sulfur c) has been mixed with the liquid pre-composition.

According to a further particularly preferred embodiment of the process of preparing a composition the composition obtained by the process comprises less than 10 wt.-%, preferably less than 5 wt.-% and more preferably less than 1 wt.-%, in each case based on the total weight of the liquid composition, of components with a flash point of less that 25°C such as methanol or ethanol.

It may furthermore be advantageous if the process of preparing a composition comprises the further process step:
iv) adjusting the pH of the composition before, during or after step ii), preferably adjusting the pH to a value in the range from 4 to 8, more preferably in the range from 5 to 8 and even more preferably in the range from 6 to 8, in each case determined at 25°C.

Adjusting the pH of the liquid composition can be accomplished by adding basic compounds such as ammonia or basic alkali salts such as LiOH, LiHCO₃, Li₂CO₃, KOH, KHCO₃, K₂CO₃, NaOH, NaHCO₃ or Na₂CO₃.

According to a further particular embodiment of the process of preparing a composition the process comprises the further process step:
v) removing at least part of the at least one solvent d) from the composition that is obtained by the process to obtain a powdered composition.

Removal of the solvent can be accomplished by simply evaporation, for example by drying the liquid composition in an oven at temperatures in the range from 20°C to 125°C, preferably in the range from 50°C to 115°C or by means of IR- or vacuum drying, optionally while stirring the liquid composition. The resultant dried product can subsequently be subjected to a milling step in order to adjust the particle size or the powdered material.

Also disclosed herein is a liquid or powdered composition that is obtainable by the process of preparing a composition.

Also disclosed herein is a lithium-sulfur electrochemical cell comprising a first electrode that has been produced by the process according to the present invention.

The first electrode of lithium-sulfur electrochemical cell produced by the process according to the present invention is the cathode. The electrochemical cell usually further comprises a second electrode material serving as the anode, a separator separating the first and the second electrode and an electrolyte.

The second electrode is based on at least one lithium-containing compound, wherein the lithium-containing compound is preferably selected from the group consisting of lithium metal (Li or Li⁰ anode), lithiated silicon, lithiated tin or another lithium-containing material.

The separator separating the first and the second electrode is preferably a porous material such as a porous membrane or a diaphragm. The separator can be made from, for example, polymers such as polyvinylidene fluoride (PVDF), polyvinylidene fluoride-co-hexafluoropropylene (PVDF-HFP), polyethylene (PE), polypropylene (PP), or similar polymers and inorganic additives such as clays or organically modified clays (e.g., clays including cationically or anionically or chemically modified surface functional group(s)).

The electrolyte is preferably selected from the group consisting of liquid electrolytes and electrolytes based on polymers in the form of solid to gelatinous films or a combination thereof. Preferably, the electrolyte is a liquid electrolyte comprising a lithium salt being dissolved in an aprotic solvent. Suitable lithium salt can be selected from the group consisting of LiPF₆, LiClO₄, lithium bis(oxalato)borate (LiBOB) or a mixture of at least two thereof. The aprotic solvent can be selected from the group consisting of ethylene carbonate, propylene carbonate, dimethyl carbonate, diethyl carbonate, 1,2-dimethoxyethane, sulfolan, toluene, dimethyl ether, diethyl ether, diglyme, tetraglyme or a mixture of at least two thereof.

Methods of preparing a lithium-sulfur electrochemical in which liquid compositions, in particular slurries, containing elemental sulfur are used to prepare the cathode are, for example, disclosed in US 7,303,837 B2.

Also disclosed herein is the use of the liquid or the powdered composition that is obtainable by the process of preparing a composition for the production of an electrode in a lithium-sulfur electrochemical cell.

The invention is now explained in more detail with the aid of non-limiting figures and examples.

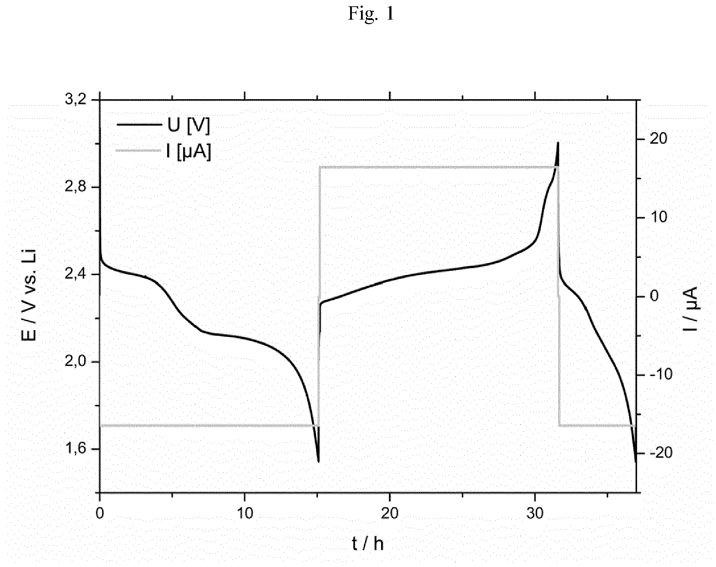

Figure 1 is a plot showing cathode voltage versus time that is obtained when subjecting the lithium-sulfur electrochemical cell that has been prepared in Example 4 to multiple discharge/charge cycles in the voltage range of 1.5 to 3.0 V and a constant current of 10 mA/g.

### EXAMPLES

### Example 1: Preparation of a liquid composition

A dissolver equipped with bead milling adaption and a 500 mL water-cooled stainless steel container (Dispermat CV/S with APS bead mill from VMA-Getzmann GmbH) was charged with 380 g cerium-stabilized zirconium dioxide beads (d = 0.7-1.2 mm), 200 g of an aqueous PEDOT : PSS dispersion (PEDOT : PSS = 1 : 2.5, solid content = 4.45%) and 10 g of ethylene glycol (> 98%, Applichem). While milling the mixture at 1000 rpm 80 g of sulfur (99.5%, Aldrich) were added in 10 g portions over one minute. The resulting slurry was further milled at 3500 rpm for 20 min. By using a grindometer (BYK-Gardner, No. 1512) the particle size was determined to be smaller than 10 µm. After sieving off the zirconium dioxide beads the viscosity of the slurry was 1800 mPa·s (Haake Viscotester VT-02, 62.5 rpm, rotor No. 1). The pH value of a diluted sample (1.1 g slurry + 4.0 g deionized water) was determined to be 1.9 (pH meter, Schott CG817T).

The undiluted slurry was coated onto a glass plate using a 500 µm doctor blade. The layer was dried for 5 h at room temperature and then for 16 h at 110°C in a drying oven. The smooth layer had a sheet resistance of 20 Ohm/sq (four point probe, Mitsubishi Chemical Analytech, Loresta-AX MCP-T370)

### Example 2: Preparation of a powdered composition

50 g of the dispersion of example 1 was transferred into a glass dish (r = 4 cm) and dried in a drying oven at 110°C for 5 h. The remaining solid was milled in a mortar grinder (Retsch RM 100) for 10 min at low fineness and 2 min at high fineness for 15 min. The ground powder was dried further at 110°C for 16 h.

The resulting powder was pressed into a pellet (r = 7 mm, h = 1.3mm, density 1.84 g/cm³). Metal electrodes of known dimensions were pressed against the bottom and top of the pellet and the resistivity was determined to be 8.9 Ohm·cm.

### Example 3: Preparation of a liquid composition

A dissolver equipped with bead milling adaption and a 500 mL water-cooled stainless steel container (Dispermat CV/S with APS bead mill from VMA-Getzmann GmbH) was charged with 380 g cerium-stabilized zirconium dioxide beads (d = 0.7-1.2 mm), 200 g of an aqueous PEDOT : PSS dispersion (PEDOT : PSS = 1 : 2.5, solid content = 4.45%) and 10 g of ethylene glycol (> 98%, Applichem). While milling the mixture at 1000 rpm 75.7 g of sulfur (99.5%, Aldrich) were added in 10 g portions over one minute. Then 4.6 g of carbon black (Super C65 from Timcal) were added. The resulting slurry was further milled at 3500 rpm for 20 min. By using a grindometer (BYK-Gardner, No. 1512) the particle size was determined to be smaller than 10 µm. After sieving off the zirconium dioxide beads the viscosity of the slurry was 2300mPa·s (Haake Viscotester VT-02, 62.5 rpm, rotor No. 1). The pH value of a diluted sample (1.0 g slurry + 4.5 g deionized water) was determined to be 2.1 (pH meter, Schott CG817T).

The undiluted slurry was coated onto a glass plate using a 500 µm doctor blade. The layer was dried for 5 h at room temperature and then 16 h at 110°C in a drying oven. The smooth layer had a sheet resistance of 7 Ohm/sq (four point probe, Mitsubishi Chemical Analytech, Loresta-AX MCP-T370).

### Example 4: Preparation of a lithium-sulfur cell in a process according to the present invention

The slurry of example 1 was coated onto an argon-plasma treated aluminium foil via doctor blading (100 µm slid width, 1 mm/s). The layer was dried by applying infrared light for 3 h and further drying in vacuum for 15 h at 60°C. The layer thickness was 25 µm. After drying, coin cells were assembled in inert atmosphere comprising a lithium anode, lithium reference electrode, polyolefin separator (Celgard), and a liquid electrolyte consisting of 1 mol/L lithiumbis(trifluoromethylsulphonyl)imid in a mixture (v/v = 4/1) of 1,2-dimethoxyethane and 1,3-dioxolane.

The coin cells were subjected to multiple discharge/charge cycles in the voltage range of 1.5 to 3.0 V and a constant current of 10 mA/g (see figure 1). The capacity of first discharge was determined to be 45 mAh/g.

## Claims

1. A process for the production of a first electrode in a lithium-sulfur electrochemical cell,
- wherein a substrate is superimposed with a liquid composition comprising
a) at least one cationic polythiophene;
b) at least one polymeric counterion;
c) elemental sulfur;
d) at least one solvent having a boiling point of 80° or more, wherein the at least one solvent d) is water;
e) at least one conductivity improving agent selected from the group consisting of a monoalkylene glycol, a dialkylene glykol, a trialkylene glycol, a tetraalkylene glycol, a mono- or diether of these mono-, di-, tri- oder tetraalkylene glycols, a lactone group-comprising compound, a amide group- or lactam group-comprising compound, a sulphone or sulphoxide, a sugar or sugar derivative, a sugar alcohol or a furan derivative, glycerol, diglycerol, triglycerol, tetraglycerol or a mixture of at least two thereof;
wherein the liquid composition comprises less than 10 wt.-% of components having a boiling point of less than 80°C, based on the total weight of the liquid composition, and wherein the boiling point in each case is determined at a pressure of 1013 mbar;
- and wherein subsequently at least a part of solvent d) is removed, thereby obtaining a substrate that is superimposed with an electrically conductive layer;
wherein the liquid composition comprises less than 5 wt.-%, based on the total weight of the liquid composition, of a particulate material based on elemental carbon.

2. The process according to claim 1, wherein the liquid composition comprises the at least one conductivity improving agent e) in an amount of at least 0.1 wt.-%, based on the total amount of the liquid composition.

3. The process according to claim 1 or 2, wherein the conductivity improving agent is liquid at 20°C and 1013 mbar and has a boiling point of more than 100°C.

4. The process according to claim 1 or 2, wherein the conductivity improving agent is solid at 20°C and 1013 mbar.

5. The process according to any of the preceding claims, wherein the conductivity improving agent e) is selected from the group consisting of ethylene glycol, propylene glycol, butylene glycol, hexylene glycol, diethylene glycol, dipropylene glycol, triethylene glycol, tripropylene glycol, tetraethylene glycol, tetrapropylene glycol, propylene glycol methyl ether, dipropylene glycol methyl ether, tripropylene glycol methyl ether, propylene glycol propyl ether, dipropylene glycol propyl ether, tripropylene glycol propyl ether, propylene glycol butyl ether, dipropylene glycol butyl ether, tripropylene glycol butyl ether, propylene glycol phenyl ether, dipropylene glycol dimethyl ether, diethylene glycol ethyl ether, diethylene glycol methyl ether, diethylene glycol butyl ether, diethylene glycol hexyl ether, ethylene glycol propyl ether, ethylene glycol butyl ether, ethylene glycol hexyl ether, triethylene glycol methyl ether, triethylene glycol ethyl ether, triethylene glycol butyl ether, ethylene glycol phenyl ether, ethylene glycol ethyl ether, tetrahydrofuran, butyrolactone, valerolactone, N-methyl caprolactam, N,N-dimethyl acetamide, N-methyl acetamide, N,N-dimethyl formamide (DMF), N-methyl formamide, N-methyl formanilide, N-methyl pyrrolidone (NMP), N-octyl pyrrolidone, pyrrolidone, sulpholane (tetramethylene sulphone), dimethyl sulphoxide (DMSO), glycerol, diglycerol, triglycerol, tetraglycerol, sucrose, glucose, fructose, lactose, sorbitol, mannitol, 2-furancarboxylic acid, 3-furancarboxylic acidor a mixture of at least two thereof.

6. The process according to any of the preceding claims, wherein the liquid composition comprises less than 2.5 wt.-%, based on the total weight of the liquid composition, of a particulate material based on elemental carbon.

7. The process according to any of the preceding claims, wherein the liquid composition comprises less than 1 wt.-%, based on the total weight of the liquid composition, of a particulate material based on elemental carbon.

8. The process according to any of the preceding claims, wherein the liquid composition is free of any particulate material based on elemental carbon.

9. The process according to any of the preceding claims, wherein the cationic polythiophene a) and the polymeric counterion b) are present in the form of a cationic polythiophene : polymeric counterion-complex.

10. The process according to any of the preceding claims, wherein the liquid composition is free of components having a flash point of less than 25°C.

## Patentansprüche

1. Verfahren zur Herstellung einer ersten Elektrode in einer elektrochemischen Lithium-Schwefel-Zelle,
- wobei ein Substrat mit einer flüssigen Zusammensetzung überlagert ist, die Folgendes umfasst
a) mindestens ein kationisches Polythiophen;
b) mindestens ein polymeres Gegenion;
c) elementarer Schwefel;
d) mindestens ein Lösungsmittel mit einem Siedepunkt von 80° oder mehr, worin das mindestens eine Lösungsmittel d) Wasser ist;
e) mindestens ein Leitfähigkeitsverbesserungsmittel, ausgewählt aus der Gruppe bestehend aus einem Monoalkylenglykol, einem Dialkylenglykol, einem Trialkylenglykol, einem Tetraalkylenglykol, einem Mono- oder Diether dieser Mono-, Di-, Tri- oder Tetraalkylenglykole, ein Lactongruppen enthaltende Verbindung, eine Amidgruppen oder Lactamgruppen enthaltende Verbindung, ein Sulfon oder Sulfoxid, ein Zucker oder ein Zuckerderivat, einen Zuckeralkohol oder ein Furanderivat, Glycerin, Diglycerin, Triglycerin, Tetraglycerin oder eine Mischung aus mindestens zwei davon umfasst;
wobei die flüssige Zusammensetzung weniger als 10 Gew.-% Komponenten mit einem Siedepunkt von weniger als 80°C, bezogen auf das Gesamtgewicht der flüssigen Zusammensetzung, umfasst und wobei der Siedepunkt in jedem Fall bei einem Druck von 1013 mbar bestimmt wird;
- und wobei anschließend mindestens ein Teil des Lösungsmittels d) entfernt wird, wodurch ein Substrat erhalten wird, das mit einer elektrisch leitfähigen Schicht überlagert ist;
wobei die flüssige Zusammensetzung weniger als 5 Gew.-%, bezogen auf das Gesamtgewicht der flüssigen Zusammensetzung, eines teilchenförmigen Materials auf Basis von elementarem Kohlenstoff umfasst.

2. Verfahren nach Anspruch 1, worin die flüssige Zusammensetzung das mindestens eine Leitfähigkeitsverbesserungsmittel e) in einer Menge von mindestens 0,1 Gew.-%, bezogen auf die Gesamtmenge der flüssigen Zusammensetzung, umfasst.

3. Verfahren nach Anspruch 1 oder 2, worin das Leitfähigkeitsverbesserungsmittel bei 20°C und 1013 mbar flüssig ist und einen Siedepunkt von mehr als 100°C aufweist.

4. Verfahren nach Anspruch 1 oder 2, worin das Leitfähigkeitsverbesserungsmittel bei 20°C und 1013 mbar fest ist.

5. Verfahren nach einem der vorstehenden Ansprüche, worin das Leitfähigkeitsverbesserungsmittel e) ausgewählt ist aus der Gruppe bestehend aus Ethylenglykol, Propylenglykol, Butylenglykol, Hexylenglykol, Diethylenglykol, Dipropylenglykol, Triethylenglykol, Tripropylenglykol, Tetraethylenglykol, Tetrapropylenglykol, Propylenglykolmethan, Dipropylenglykolmethylether, Tripropylenglykolmethylether, Propylenglykolpropylether, Dipropylenglykolpropylether, Tripropylenglykolpropylether, Propylenglykolbutylether, Dipropylenglykolbutylether, Tripropylenglykolbutylether, Propylenglykolphenylether, Dipropylenglykoldimethylether, Diethylenglykolethylether, Diethylenglykolmethylether, Diethylenglykolbutylether, Diethylenglykolhexylether, Ethylenglykolpropylether, Ethylenglykolbutylether, Ethylenglykolhexylether, Triethylenglykolmethylether, Triethylenglykolethylether , Triethylenglykolbutylether, Ethylenglykolphenylether, Ethylenglykolethylether, Tetrahydrofuran, Butyrolacton, Valerolacton, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon, Sulfonan (Tetramethylensulfon), Dimethylsulfoxid (DMSO), Glycerin, Diglycerin, Triglycerin, Tetraglycerin, Saccharose, Glucose, Fructose, Lactose, Sorbit, Mannit, 2-Furancarbonsäure, 3-Furancarbonsäure oder eine Mischung aus mindestens zwei davon.

6. Verfahren nach einem der vorhergehenden Ansprüche, worin die flüssige Zusammensetzung weniger als 2,5 Gew.-%, bezogen auf das Gesamtgewicht der flüssigen Zusammensetzung, eines teilchenförmigen Materials auf Basis von elementarem Kohlenstoff umfasst.

7. Verfahren nach einem der vorhergehenden Ansprüche, worin die flüssige Zusammensetzung weniger als 1 Gew.-%, bezogen auf das Gesamtgewicht der flüssigen Zusammensetzung, eines teilchenförmigen Materials auf Basis von elementarem Kohlenstoff umfasst.

8. Verfahren nach einem der vorstehenden Ansprüche, worin die flüssige Zusammensetzung frei von jeglichem teilchenförmigen Material auf der Basis von elementarem Kohlenstoff ist.

9. Verfahren nach einem der vorstehenden Ansprüche, worin das kationische Polythiophen a) und das polymere Gegenion b) in Form eines kationischen Polythiophens: polymeren Gegenionenkomplexes vorliegen.

10. Verfahren nach einem der vorhergehenden Ansprüche, worin die flüssige Zusammensetzung frei von Komponenten mit einem Flammpunkt von weniger als 25°C ist.

## Revendications

1. Procédé de fabrication d'une première électrode dans une pile électrochimique au lithium-soufre,
- dans laquelle un substrat est superposé avec une composition liquide comprenant
a) au moins un polythiophène cationique ;
b) au moins un contre-ion polymère ;
c) du soufre élémentaire ;
d) au moins un solvant ayant un point d'ébullition de 80° ou plus, où le au moins un solvant d) est l'eau ;
e) au moins un agent améliorant la conductivité choisi dans le groupe constitué par un monoalkylèneglycol, un dialky-lèneglycol, un trialkylèneglycol, un tétraalkylèneglycol, un mono- ou diéther de ces mono-, di-, tri- ou tétraalkylèneglycol, un composé contenant un groupe lactone, un composé contenant un groupe amide ou un groupe lactame, une sulfone ou un sulfoxyde, un sucre ou un dérivé de sucre, un alcool de sucre ou un dérivé de furanne, du glycérol, du di-glycérol, du triglycérol, du tétraglycérol ou un mélange d'au moins deux de ceux-ci ;
dans laquelle la composition liquide comprend moins de 10 % en poids de composants ayant un point d'ébullition inférieur à 80°C, par rapport au poids total de la composition liquide, et dans laquelle le point d'ébullition est déterminé dans chaque cas à une pression de 1013 mbar ;
- et dans laquelle ensuite au moins une partie du solvant d) est éliminée, obtenant ainsi un substrat qui est superposé avec une couche électriquement conductrice ;
dans laquelle la composition liquide comprend moins de 5 % en poids, par rapport au poids total de la composition liquide, d'un matériau particulaire à base de carbone élémentaire.

2. Procédé selon la revendication 1, dans lequel la composition liquide comprend au moins un agent améliorant la conductivité e) en une quantité d'au moins 0,1 % en poids, par rapport à la quantité totale de la composition liquide.

3. Procédé selon la revendication 1 ou 2, dans lequel l'agent améliorant la conductivité est liquide à 20°C et 1013 mbar et a un point d'ébullition supérieur à 100°C.

4. Procédé selon la revendication 1 ou 2, dans lequel l'agent améliorant la conductivité est solide à 20°C et 1013 mbar.

5. Procédé selon l'une quelconque des revendications précédentes, dans lequel l'agent améliorant la conductivité e) est choisi dans le groupe constitué par l'éthylène glycol, le propylène glycol, le butylène glycol, l'hexylène glycol, le diéthylène glycol, le dipropylène glycol, le triéthylène glycol, le tripropylène glycol, le tétraéthylène glycol, le tétrapropylène glycol, le propylène glycol éther méthylique, le dipropylène glycol éther méthylique, éther méthylique de tripropylèneglycol, éther propylique de propylèneglycol, éther propylique de dipropylèneglycol, éther propylique de tripropylèneglycol, éther butylique de propylèneglycol, éther butylique de dipropylèneglycol, éther butylique de tripropylèneglycol, éther méthyl de propylèneglycol, éther diméthylique de dipropylèneglycol, éther éthyléther diéthylèneglycol, éther diéthylèneglycol-méthylique de diéthylèneglycol, éther diéthylèneglycol-butylique de diéthylèneglycol, éther hexylique de diéthylène glycol, éther propylique d'éthylène glycol, éther butylique d'éthylène glycol, éther hexylique d'éthylène glycol, éther méthylique de triéthylène glycol, éther éthylique de triéthylène glycol, éther butylique de triéthylène glycol, éther butylique d'éthylène glycol, éther éthylique de éthylène glycol, tétrahydrofuranne, butyrolactone, valérolactone, N-méthyl caprolactame, N,N-diméthyl acétamide, N-méthyl acétamide, N-diméthylformamide (DMF), N-méthylformamide, N-méthylformanilide, N-méthylformanilide, N-méthylpyrrolidone (NMP), N-octylpyrrolidone, pyrrolidone, sulfolane (tétraméthylène sulfone), diméthyl sulphoxide (DMSO), glycérol, diglycérol, triglycérol, tétraglycérol, saccharose, glucose, fructose, lactose, sorbitol, mannitol, acide 2-furancarboxylique, acide 3-furancarboxylique ou un mélange d'au moins deux de ceux-ci.

6. Procédé selon l'une quelconque des revendications précédentes, dans lequel la composition liquide comprend moins de 2,5 % en poids, par rapport au poids total de la composition liquide, d'une matière particulaire à base de carbone élémentaire.

7. Procédé selon l'une quelconque des revendications précédentes, dans lequel la composition liquide comprend moins de 1 % en poids, par rapport au poids total de la composition liquide, d'une matière particulaire à base de carbone élémentaire.

8. Procédé selon l'une quelconque des revendications précédentes, dans lequel la composition liquide est exempte de toute matière particulaire à base de carbone élémentaire.

9. Procédé selon l'une quelconque des revendications précédentes, **caractérisé en ce que** le polythiophène cationique a) et le contre-ion polymère b) sont présents sous la forme d'un polythiophène cationique : complexe de contre-ion polymère.

10. Procédé selon l'une quelconque des revendications précédentes, dans lequel la composition liquide est exempte de composants ayant un point d'éclair inférieur à 25°C.
